# EUROPEAN PATENT APPLICATION

(11) **EP 4 075 285 A1**
(43) Date of publication of application: **19.10.2022**
(21) Application number: 22167910.3
(22) Date of filing: 12.04.2022
(51) Int. Cl.: G06F 12/02, G06F 12/0831, G06F 12/14, G06F 12/0886, G06F 12/109

(54) **SYSTEMS AND METHODS FOR TRANSFORMING DATA IN-LINE WITH READS AND WRITES TO COHERENT HOST-MANAGED DEVICE MEMORY**

(30) Priority: 12.04.2021 US 202117227421
(71) Applicant: Facebook, Inc., Menlo Park, CA 94025 (US)
(72) Inventor: VIJAYRAO, Narsing Krishna, Menlo Park, 94025 (US); PETERSEN, Christian Markus, Menlo Park, 94025 (US)
(74) Representative: Murgitroyd & Company

(57) **Abstract**

The disclosed computer-implemented method may include (1) receiving, from an external host processor via a cache-coherent interconnect, a request to access a host address of a coherent memory space of the external host processor, (2) when the request is to read data from the host address, (a) performing an in-line transformation on the data to generate second data and (b) writing the second data to the physical address of the device-attached physical memory mapped to the host address, and (3) when the request is to read data from the host address, (a) reading the data from the physical address of the device-attached physical memory mapped to the host address, (b) performing a reversing in-line transformation on the data to generate second data, and (c) returning the second data to the external host processor via the cache-coherent interconnect. Various other methods, systems, and computer-readable media are also disclosed.

## Description

### TECHNICAL FIELD

The present disclosure is generally directed to storage devices that transform data in-line with reads and writes to coherent host-managed device memory.

### BACKGROUND

The demand for handling complex computational and memory intensive workloads (such as those involved in Artificial Intelligence (Al), Machine Learning (ML), analytics, and video transcoding) is expanding at an ever-increasing rate. Computational and memory intensive workloads are increasingly performed by heterogeneous processing and memory systems that include general-purpose host processors, task-specific accelerators, and memory expanders. For many computational and memory intensive workloads, it may be advantageous for these devices to coherently share and/or cache memory resources. Unfortunately, conventional systems with coherent memory spaces may place extra computational demands on the general-purpose host processors that manage the coherent memory spaces and/or may have larger attack surfaces as a result of many, possibly incongruous, devices sharing access to the same memory resources. Accordingly, the instant disclosure identifies and addresses a need for additional and improved systems and methods for efficiently and securely managing shared coherent memory spaces.

### SUMMARY OF THE INVENTION

According to a first aspect of the present invention, there is provided a storage device comprising:
a device-attached physical memory accessible to an external host processor via a cache-coherent interconnect, wherein addresses of the device-attached physical memory are mapped to a coherent memory space of the external host processor;
one or more internal physical processors adapted to:
   receive, from the external host processor via the cache-coherent interconnect, a request to write first data to a host address of the coherent memory space of the external host processor;
   perform an in-line transformation on the first data to generate second data; and
   write the second data to a physical address of the device-attached physical memory corresponding to the host address.

In one or more embodiments, the in-line transformation may comprise an encryption operation;
the one or more internal physical processors may be adapted to:
perform the in-line transformation by performing the encryption operation on the first data;
write the second data by writing the encrypted first data to the physical address of the device-attached physical memory.

In one or more embodiments, the storage device may further comprise a cryptographic-key store containing multiple cryptographic keys, each of the cryptographic keys may be mapped to one or more requester identifiers, wherein:
the request may comprise a requester identifier previously mapped to a cryptographic key in the cryptographic-key store; and
the one or more internal physical processors may be adapted to:
   use the requester identifier to locate the cryptographic key; and
   use the cryptographic key to perform the encryption operation on the first data.

In one or more embodiments, the requester identifier may comprise an identifier of a thread executing on the external host processor, the thread having generated the request.

In one or more embodiments, the one or more internal physical processors may be further adapted to:
receive, from the external host processor, a second request to write third data to a second host address of the coherent memory space of the external host processor, wherein:
   the second request may comprise a second requester identifier previously mapped to a second cryptographic key in the cryptographic-key store;
   the second requester identifier may comprise a second identifier of a second thread executing on the external host processor; and
   the second thread generated the second request;
translate the second host address into a second device address of the device-attached physical memory;
use the second requester identifier to locate the second cryptographic key;
use the second cryptographic key to perform the encryption operation on the third data; and
write the encrypted third data to the second physical address of the device-attached physical memory.

In one or more embodiments, a first range of addresses of the coherent memory space of the external host processor may be designated as encrypted memory, the host address may fall within the first range of addresses;
a second range of addresses of the coherent memory space of the external host processor may be designated as unencrypted memory; and
the one or more internal physical processors may be adapted to perform the encryption operation on the first data in response to determining that the host address falls within the first range of addresses.

In one or more embodiments, the one or more internal physical processors may be further adapted to:
receive, from the external host processor, a second request to write third data to a second host address of the coherent memory space of the external host processor, the second host address may fall within the second range of addresses;
translate the second host address into a second device address of the device-attached physical memory;
refrain from encrypting the second data in response to determining that the second host address falls within the second range of addresses; and
write the unencrypted third data to the second physical address of the device-attached physical memory.

In one or more embodiments, the in-line transformation may comprise a compression operation;
the one or more internal physical processors may be adapted to:
perform the in-line transformation by performing the compression operation on the first data;
write the second data by writing the compressed first data to the physical address of the device-attached physical memory.

In one or more embodiments, a first range of addresses of the coherent memory space of the external host processor may be designated for storing a first type of data associated with the compression operation, the host address may fall within the first range of addresses;
a second range of addresses of the coherent memory space of the external host processor is designated for storing a second type of data associated with a second compression operation; and
the one or more internal physical processors may be adapted to perform the compression operation on the first data in response to determining that the host address falls within the first range of addresses.

In one or more embodiments, the one or more internal physical processors may be further adapted to:
receive, from the external host processor, a second request to write third data to a second host address of the coherent memory space of the external host processor, the second host address may fall within the second range of addresses;
translate the second host address into a second device address of the device-attached physical memory;
perform the second compression operation, instead of the compression operation, on the third data in response to determining that the second host address falls within the second range of addresses; and
write the compressed third data to the second physical address of the device-attached physical memory.

In a second aspect of the present invention, there is provided a storage device comprising:
a device-attached physical memory managed by and accessible to an external host processor via a cache-coherent interconnect, wherein addresses of the device-attached physical memory are mapped to a coherent memory space of the external host processor;
one or more internal physical processors adapted to:
   receive, from the external host processor via the cache-coherent interconnect, a request to read from a host address of the coherent memory space of the external host processor;
   translate the host address into a device address of the device-attached physical memory;
   read first data from the physical address of the device-attached physical memory;
   perform an in-line transformation on the first data to generate second data; and
   return the second data to the external host processor via the cache-coherent interconnect.

In one or more embodiments, the in-line transformation may comprises a decryption operation;
the one or more internal physical processors may be adapted to:
perform the in-line transformation by performing the decryption operation on the first data;
return the second data by returning the decrypted first data to the external host processor via the cache-coherent interconnect.

In one or more embodiments, the storage device may further comprise a cryptographic-key store containing multiple cryptographic keys, each of the cryptographic keys may be mapped to one or more requester identifiers, wherein:
the request may further comprise a requester identifier previously mapped to a cryptographic key in the cryptographic-key store; and
the one or more internal physical processors may be adapted to:
   use the requester identifier to locate the cryptographic key; and
   use the cryptographic key to perform the decryption operation on the first data.

In one or more embodiments, the requester identifier may comprise an identifier of a thread executing on the external host processor, the thread having generated the request.

In one or more embodiments, the one or more internal physical processors may be further adapted to:
receive, from the external host processor, a second request to read from a second host address of the coherent memory space of the external host processor, wherein:
   the second request may comprise a second requester identifier previously mapped to a second cryptographic key in the cryptographic-key store;
   the second requester identifier may comprise a second identifier of a second thread executing on the external host processor; and
   the second thread generated the second request;
translate the second host address into a second device address of the device-attached physical memory;
use the second requester identifier to locate the second cryptographic key;
use the second cryptographic key to perform the decryption operation on the third data; and
return the decrypted third data to the external host processor via the cache-coherent interconnect.

In one or more embodiments, a first range of addresses of the coherent memory space of the external host processor may be designated as encrypted memory, the host address may fall within the first range of addresses;
a second range of addresses of the coherent memory space of the external host processor may be designated as unencrypted memory; and
the one or more internal physical processors may be adapted to perform the decryption operation on the first data in response to determining that the host address falls within the first range of addresses.

In one or more embodiments, the one or more internal physical processors may be further adapted to:
receive, from the external host processor, a request to read from a second host address of the coherent memory space of the external host processor, the second host address may fall within the second range of addresses;
translate the second host address into a second device address of the device-attached physical memory;
refrain from decrypting the second data in response to determining that the second host address falls within the second range of addresses; and
return the third data to the external host processor via the cache-coherent interconnect.

In one or more embodiments, the in-line transformation may comprise a decompression operation;
the one or more internal physical processors may be adapted to:
perform the in-line transformation by performing the decompression operation on the first data; and
return the second data by returning the decompressed first data to the external host processor via the cache-coherent interconnect.

In one or more embodiments, a first range of addresses of the coherent memory space of the external host processor may be designated for storing a first type of data associated with the decompression operation, the host address may fall within the first range of addresses;
a second range of addresses of the coherent memory space of the external host processor may be designated for storing a second type of data associated with a second decompression operation; and
the one or more internal physical processors may be adapted to perform the decompression operation on the first data in response to determining that the host address falls within the first range of addresses.

In a third aspect of the present invention, there is provided a computer-implemented method comprising:
receiving, from an external host processor via a cache-coherent interconnect, a request to access a host address of a coherent memory space of the external host processor, wherein physical addresses of a device-attached physical memory are mapped to the coherent memory space of the external host processor;
when the request is to write data to the host address,
   performing an in-line transformation on the data to generate second data; and
   writing the second data to the physical address of the device-attached physical memory mapped to the host address; and
when the request is to read data from the host address,
   reading the data from the physical address of the device-attached physical memory mapped to the host address;
   performing a reversing in-line transformation on the data to generate second data; and
   returning the second data to the external host processor via the cache-coherent interconnect.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is a block diagram of an exemplary coherent memory system including an exemplary storage device with an in-line transformation engine.
FIG. 2 is a block diagram of an exemplary coherent memory system including an exemplary storage device with an in-line encryption/decryption engine.
FIG. 3 is a block diagram of an exemplary coherent memory system including an exemplary storage device with an exemplary in-line compression/decompression engine.
FIG. 4 is a block diagram of an exemplary compute express link system.
FIG. 5 is a block diagram of another exemplary compute express link system.
FIG. 6 is a flow diagram of an exemplary method for transforming data in-line with reads and writes to coherent host-managed device memory.
FIG. 7 is a block diagram of an exemplary coherent memory space and corresponding exemplary address mappings.
FIG. 8 is a block diagram of an exemplary coherent memory space having a region designated for storing encrypted data and a region designated for storing unencrypted data.
FIG. 9 is a block diagram of an exemplary coherent memory space having a region designated for storing compressed data and a region designated for storing uncompressed data.
FIG. 10 is a block diagram of an exemplary coherent memory space having two regions designated for storing compressed data, each region being associated with a different compression algorithm.
FIG. 11 is a flow diagram of an exemplary method for performing encryption operations in-line with writes to coherent host-managed device memory.
FIG. 12 is a flow diagram of an exemplary method for identifying cryptographic keys for performing encryption/decryption operations in-line with reads and writes to coherent host-managed device memory.
FIG. 13 is a diagram of an exemplary data flow for performing encryption operations in-line with writes to coherent host-managed device memory.
FIG. 14 is a flow diagram of an exemplary method for performing decryption operations in-line with reads from coherent host-managed device memory.
FIG. 15 is a diagram of an exemplary data flow for performing decryption operations in-line with reads from encrypted coherent host-managed device memory.
FIG. 16 is a diagram of an exemplary data flow for performing reads and writes to unencrypted coherent host-managed device memory.
FIG. 17 is a flow diagram of an exemplary method for performing compression operations in-line with writes to coherent host-managed device memory.
FIG. 18 is a diagram of an exemplary data flow for performing compression/decompression operations in-line with reads and writes to coherent host-managed device memory.
FIG. 19 is a flow diagram of an exemplary method for performing decompression operations in-line with reads from coherent host-managed device memory.
FIG. 20 is a diagram of an exemplary data flow for performing reads and writes to uncompressed coherent host-managed device memory.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

The demand for handling complex computational and memory intensive workloads (such as those involved in Artificial Intelligence (Al), Machine Learning (ML), analytics, and video transcoding) is expanding at an ever-increasing rate. Computational and memory intensive workloads are increasingly performed by heterogeneous processing and memory systems that include general-purpose host processors, task-specific accelerators, and memory expanders. For many computational and memory intensive workloads, it may be advantageous for these devices to coherently share and/or cache memory resources. Unfortunately, conventional systems with coherent memory spaces may place extra computational demands on the general-purpose host processors that manage the coherent memory spaces and/or may have larger attack surfaces as a result of many, possibly incongruous, devices sharing access to the same memory resources. Accordingly, the instant disclosure identifies and addresses a need for additional and improved systems and methods for efficiently and securely managing shared coherent memory spaces.

The present disclosure is generally directed to storage devices that transform data in-line with reads and writes to coherent host-managed device memory. As will be explained in greater detail below, embodiments of the present disclosure may perform various in-line encryption/decryption and/or compression/decompression operations when reading and/or writing data to shared device-attached memory resources. In some embodiments, the disclosed devices may perform these in-line transformations in a way that is transparent to external host processors and/or accelerators. In some embodiments, the disclose devices may enable a coherent memory space to be partitioned into multiple regions, each region being associated with one or more in-line transformations, such that external host processors and/or accelerators are able to choose an appropriate in-line transformation by writing data to an associated region of memory. For example, a coherent memory space may include one or more encrypted sections, one or more unencrypted sections, one or more compressed sections, and/or one or more uncompressed sections.

When performing encryption, the disclosed systems and methods may manage cryptographic keys at a processor, core, or thread level such that one processor, core, or thread cannot access the encrypted data of another processor, core, or thread. By performing encryption in this way, the disclosed systems may decrease the attack surface of shared system memory and/or prevent data stored to shared system memory from being access by unauthorized entities or malicious intruders. When performing compression, the disclosed systems may use multiple compression algorithms, each being associated with one or more memory regions and/or types of stored data.

Features from any of the embodiments described herein may be used in combination with one another in accordance with the general principles described herein. These and other embodiments, features, and advantages will be more fully understood upon reading the following detailed description in conjunction with the accompanying drawings and claims.

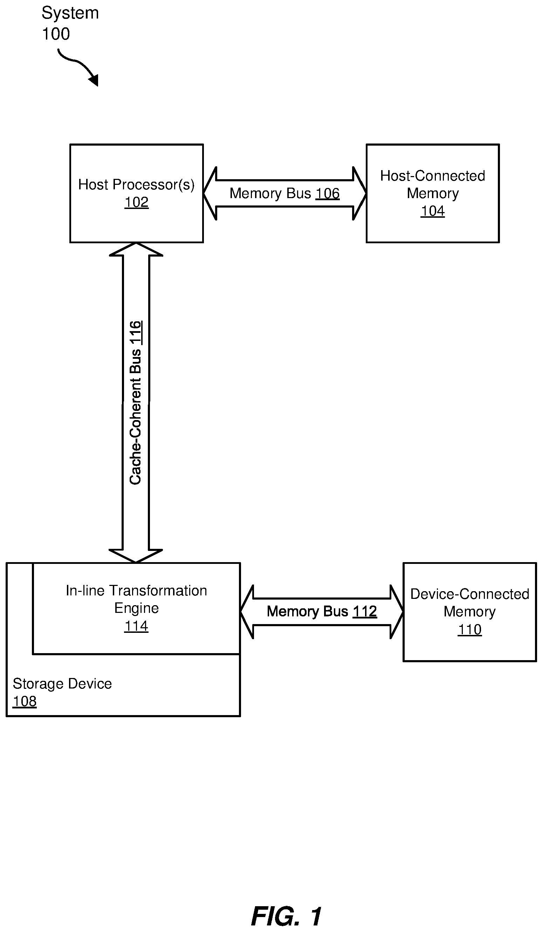

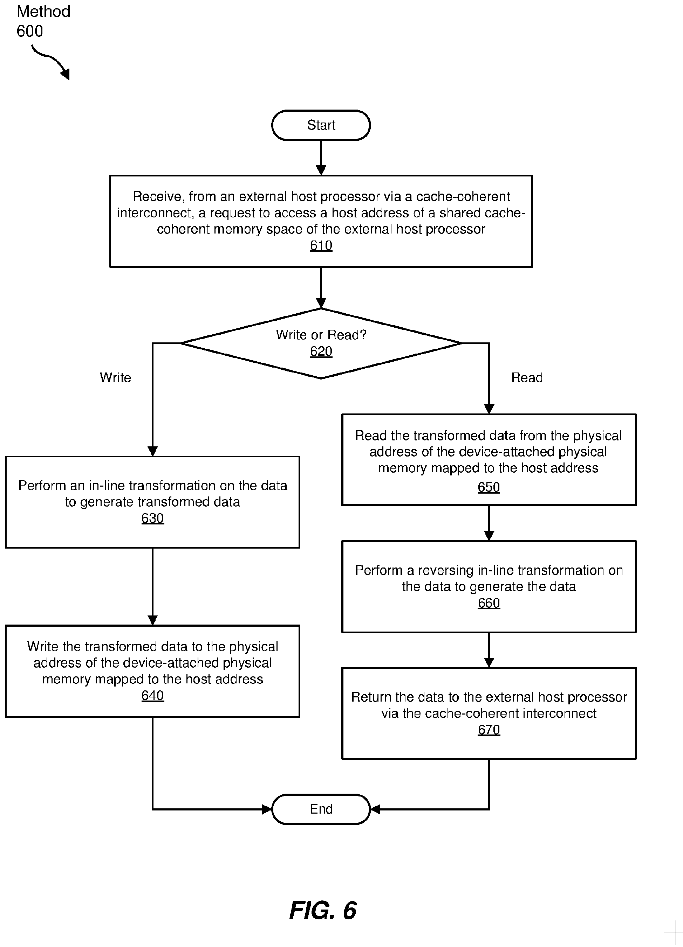

The following will provide, with reference to FIGS. 1-5, detailed descriptions of exemplary coherent storage systems capable of transforming data in-line with reads and writes to coherent host-managed device memory. The discussions corresponding to FIGS. 6-20 will provide detailed descriptions of corresponding methods and data flows.

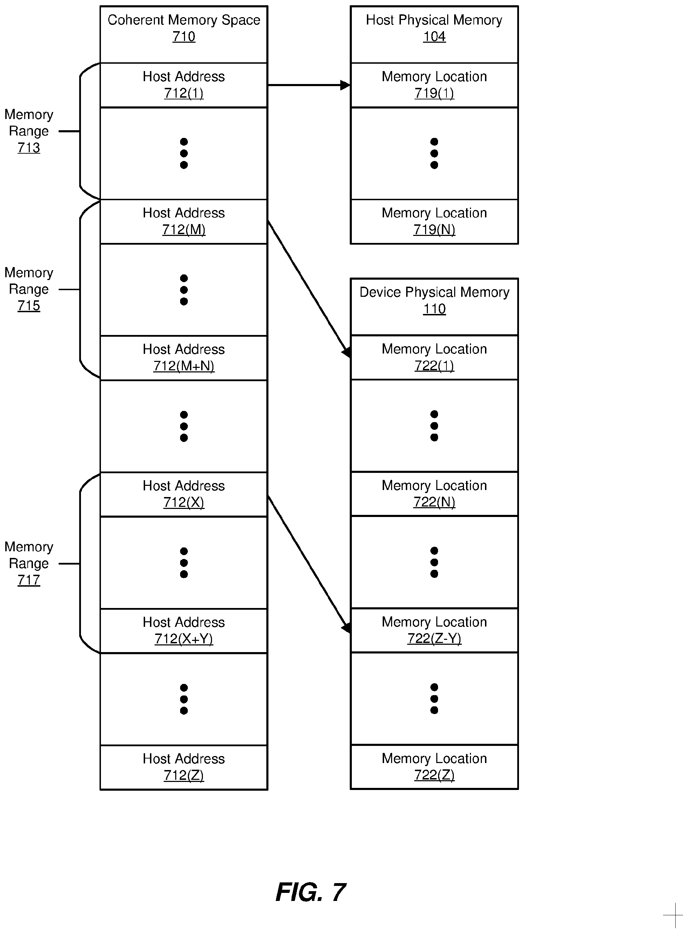

FIG. 1 is a block diagram of an exemplary cache-coherent storage system 100. Cache-coherent storage system 100 may include one or more host processor(s) 102 (e.g., host central processing units (CPUs)) directly attached to a host-connected memory 104 via a memory bus 106 and a storage device 108 directly attached to a device-connected memory 110 via a memory bus 112. As shown, host processor(s) 102 and storage device 108 may be interconnected through a cache-coherent bus 116. In some embodiments, host processor(s) 102 may read and write data directly to host-connected memory 104 through memory bus 106 and indirectly to device-connected memory 110 through cache-coherent bus 116. Additionally or alternatively, storage device 108 may read and write data directly to device-connected memory 110 through memory bus 112 and indirectly to host-connected memory 104 through cache-coherent bus 116. In some embodiments, host processor(s) 102, storage system 108, and/or any number of additional devices, not shown, may reference and/or access memory locations contained in host-connected memory 104 and device-connected memory 110 using a coherent memory space or address space (e.g., coherent memory space 710 illustrated in FIGS. 7-10) that includes one or more host address ranges mapped to cacheable memory locations contained in host-connected memory 104 and/or one or more address ranges mapped to cacheable memory locations contained in device-connected memory 110.

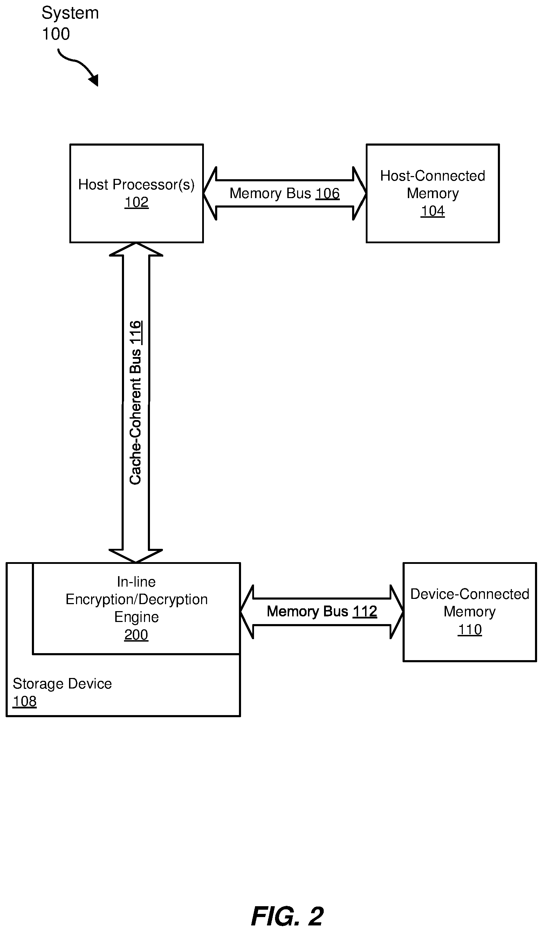

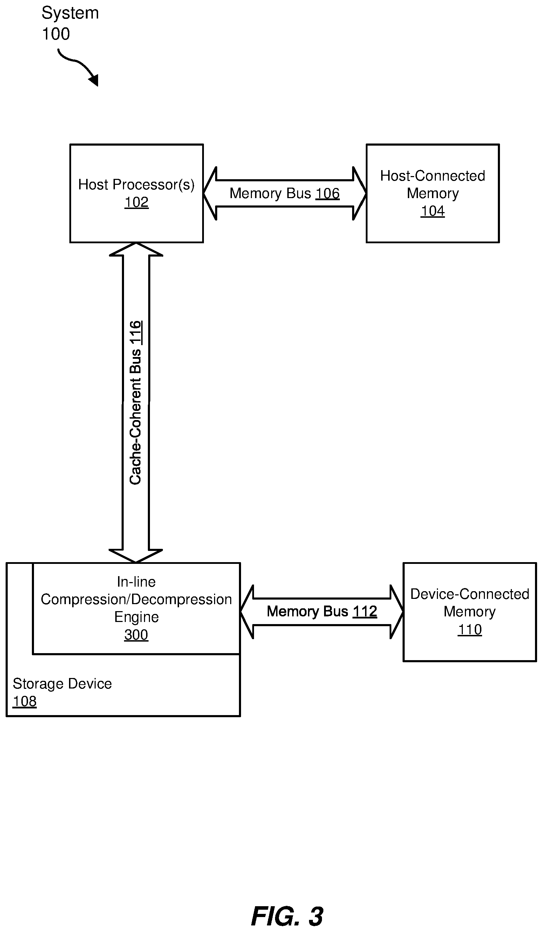

As shown in FIG. 1, storage device 108 may include an in-line transformation engine 114 for performing in-line transformations on data written to or read from device-connected memory 110 via cache-coherent bus 116. In-line transformation engine 114 may include any suitable physical processor or processors capable of performing in-line transformations (e.g., encryption operations, compression operations, transcription operations, etc.) on data. Examples of in-line transformation engine 114 include, without limitation, microprocessors, microcontrollers, Central Processing Units (CPUs), Digital signal processors (DSPs), Field-Programmable Gate Arrays (FPGAs), Application-Specific Integrated Circuits (ASICs), portions of one or more of the same, variations or combinations of one or more of the same, or any other suitable physical processor. In some embodiments, in-line transformation engine 114 may include an in-line encryption/decryption engine 200 (e.g., as shown in FIG. 2) capable of performing in-line encryption/decryption operations on data written to or read from device-connected memory 110 via cache-coherent bus 116 and/or an in-line compression/decompression engine 300 (e.g., as shown in FIG. 3) capable of performing one or more in-line compression/decompression operations on data written to or read from device-connected memory 110 via cache-coherent bus 116.

Host-connected memory 104 and/or device-connected memory 110 may represent any type of form of memory capable of storing cacheable data. Examples of host-connected memory 104 and/or device-connected memory 110 include, without limitation, dynamic randomly addressable memory (DRAM), static randomly addressable memory (SRAM), High Bandwidth Memory (HBM), cache memory, volatile memory, non-volatile memory (e.g., Flash memory), or any other suitable form of computer memory. Memory bus 106 and memory bus 112 may represent any internal memory bus suitable for interfacing with host-connected memory 104 and/or device-connected memory 110. Examples of memory bus 106 and memory bus 112 include, without limitation, Double Data Rate (DDR) buses, Serial ATA (SATA) buses, Serial Attached SCSI (SAS) buses, High Bandwidth Memory (HBM) buses, Peripheral Component Interconnect Express (PCIe) buses, and the like.

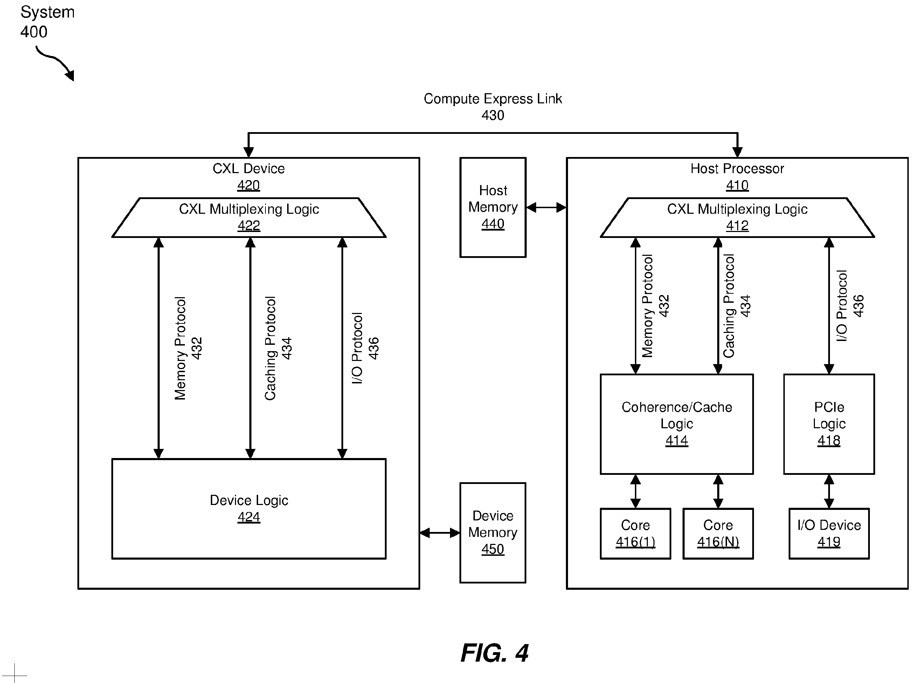

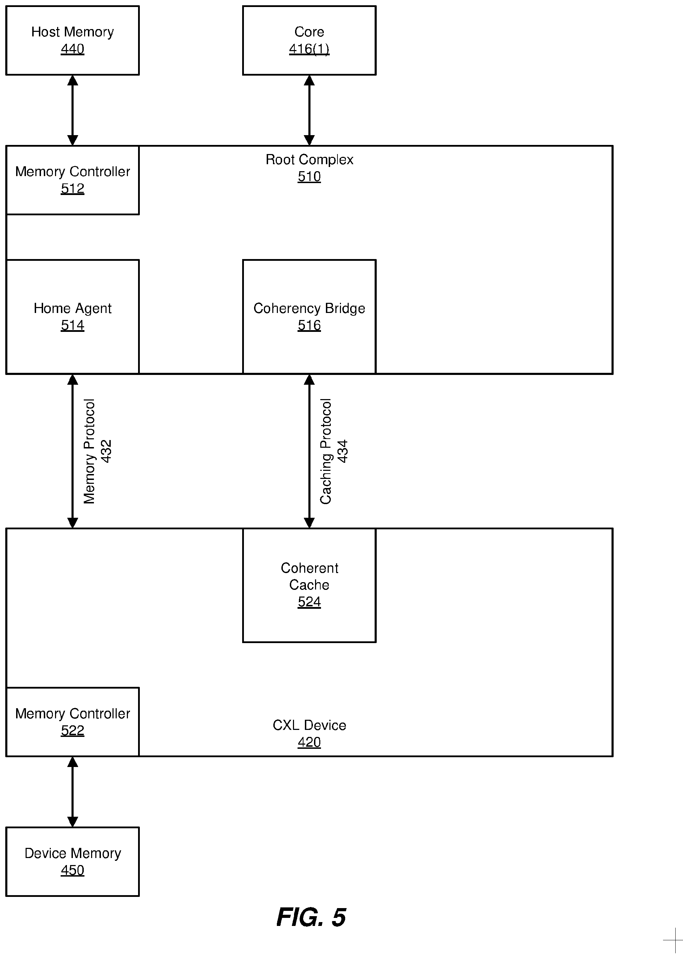

Cache-coherent bus 116 may represent any high-bandwidth and/or low-latency chip-to-chip interconnect, external bus, or expansion bus capable of hosting a providing connectivity (e.g., I/O, coherence, and/or memory semantics) between host processor(s) 102 and external devices or packages such as caching devices, workload accelerators (e.g., Graphics Processing Unit (GPU) devices, Field-Programmable Gate Array (FPGA) devices, Application-Specific Integrated Circuit (ASIC) devices, machine learning accelerators, tensor and vector processor units, etc.), memory expanders, and memory buffers. In some embodiments cache-coherent bus 116 may include a standardized interconnect (e.g., a Peripheral Component Interconnect Express (PCIe) bus), a proprietary interconnect, or some combination thereof. In at least one embodiment, cache-coherent bus 116 may include a compute express link (CXL) interconnect such as those illustrated in FIGS. 4 and 5.

Example system 100 in FIG. 1 may be implemented in a variety of ways. For example, all or a portion of example system 100 may represent portions of an example system 400 in FIG. 4. As shown in FIG. 4, system 400 may include a host processor 410 connected to a CXL device 420 via a compute express link 430. In some embodiments, host processor 410 may be directly connected to a host memory440 via an internal memory bus, and CXL device 420 may be directly connected to a device memory 450 via an internal memory bus. In this example, the internal components of host processor 410 may communicate over compute express link 430 with the internal components of CXL device 420 using one or more CXL protocols (e.g., a memory protocol 432, a caching protocol 434, and/or an I/O protocol 436) that are multiplexed by multiplexing logic 412 and 422.

As shown in FIG. 4, host processor 410 may include one or more processing core(s) 416 that are capable of accessing and caching data stored to host memory 440 and device memory 450 via coherence/cache logic 414. Host processor 410 may also include an I/O device 419 that is capable of communication over compute express link 430 via PCIe logic 418. As shown in FIG. 5, in some embodiments, host processor 410 may include a root complex 510 (e.g., a PCIe compatible root complex) that connects one or more of cores 416 to host memory 440 and device memory 450. In this example, root complex 510 may include a memory controller 512 for managing read and write operations to host memory 440, a home agent 514 for performing translations between physical, channel, and/or system memory addresses, and a coherency bridge 516 for resolving system wide coherency for a given host address. As shown in FIG. 4, CXL device 420 may include device logic 424 for performing memory and CXL protocol tasks. In some embodiments, device logic 424 may include one or more in-line transformation engines, such as those described in connection with FIGS. 1-3, and a memory controller 522 that manages read and write operations to device memory 450 (e.g., as shown in FIG. 5). In at least one embodiment, CXL device 420 may include a coherent cache 524 for caching host-managed data.

FIG. 6 is a flow diagram of an exemplary computer-implemented method 600 for transforming data in-line with reads and writes to coherent host-managed device memory. The steps shown in FIG. 6 may be performed by any suitable computer-executable code and/or computing system, including the system(s) illustrated in FIGS. 1, 2, 3, 4, and 5. In one example, each of the steps shown in FIG. 6 may represent an algorithm whose structure includes and/or is represented by multiple sub-steps, examples of which will be provided in greater detail below.

As illustrated in FIG. 6, at step 610 one or more of the systems described herein may receive, from an external host processor, a request to access a host address of a shared coherent memory space. For example, in-line transformation engine 114 may, as part of storage device 108, receive, from host processor 102 via cache-coherent interconnect 116, a request to access host address 712(M) of a shared coherent memory space 710 of host processor 102.

FIG. 7 illustrates an exemplary coherent memory space 710 having host addresses 712(1)-(Z) that have been mapped to (1) physical memory locations of host physical memory 104 and (2) physical memory locations of device physical memory 110. As shown, a memory range 713 of coherent memory space 710 may be mapped to memory locations 719(1)-(N) of host physical memory 104, a memory range 715 of coherent memory space 710 may be mapped to memory locations 722(1)-(N) of device physical memory 110, and a memory range 717 of coherent memory space 710 may be mapped to memory locations 722(Z-Y)-(Z) of device physical memory 110. In this example, host processors or accelerators that share access to coherent memory space 710 may read or write data to host physical memory 104 by accessing the host addresses in memory range 713. Similarly, host processors or accelerators that share access to coherent memory space 710 may read or write data to device physical memory 110 by accessing the host addresses in either of memory ranges 715 or 717.

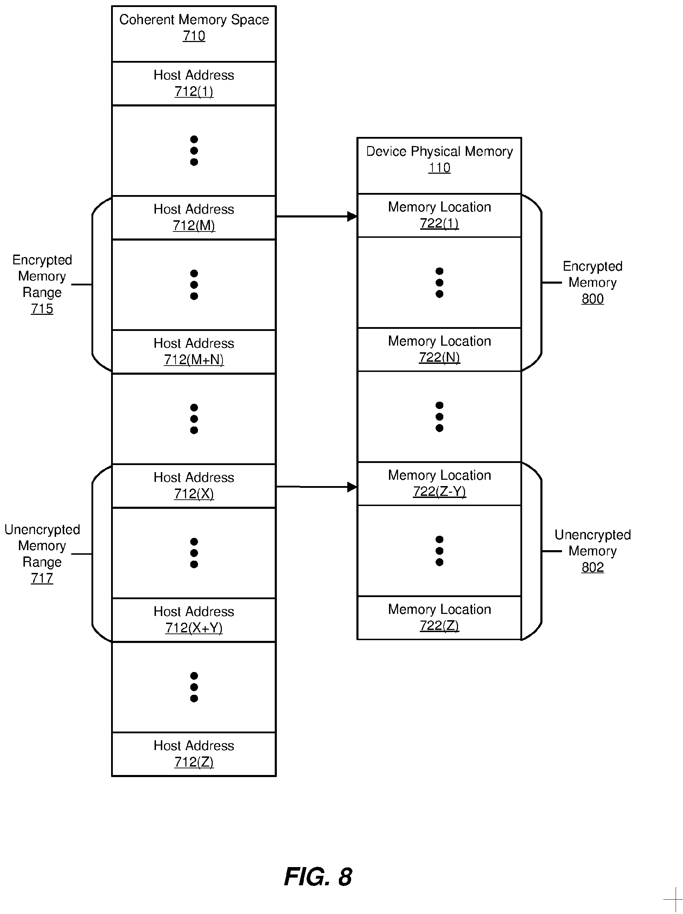

As shown in FIGS. 8-10, one or more regions of the disclosed coherent memory spaces may be associated with one or more reversable in-line transformations or conversions (e.g., lossless or lossy data manipulations such as encryption operations, compression operations, transcription operations, etc.) that may be performed on any data written to those regions. For example, as shown in FIG. 8, memory range 715 of coherent memory space 710 may be designated for storing encrypted data and/or may be associated with a particular encryption algorithm such that the disclosed storage devices may automatically encrypt any data written to memory range 715 of coherent memory space 710 before storage to encrypted memory 800 of device physical memory 110. In some embodiments, one or more regions of the disclosed coherent memory spaces may not be associated with any in-line transformation or conversion. For example, memory range 717 of coherent memory space 710 may not be designated for storing encrypted data such that the disclosed storage devices may automatically store, as unencrypted data to unencrypted memory 802 of device physical memory 110, any data written to memory range 717 of coherent memory space 710.

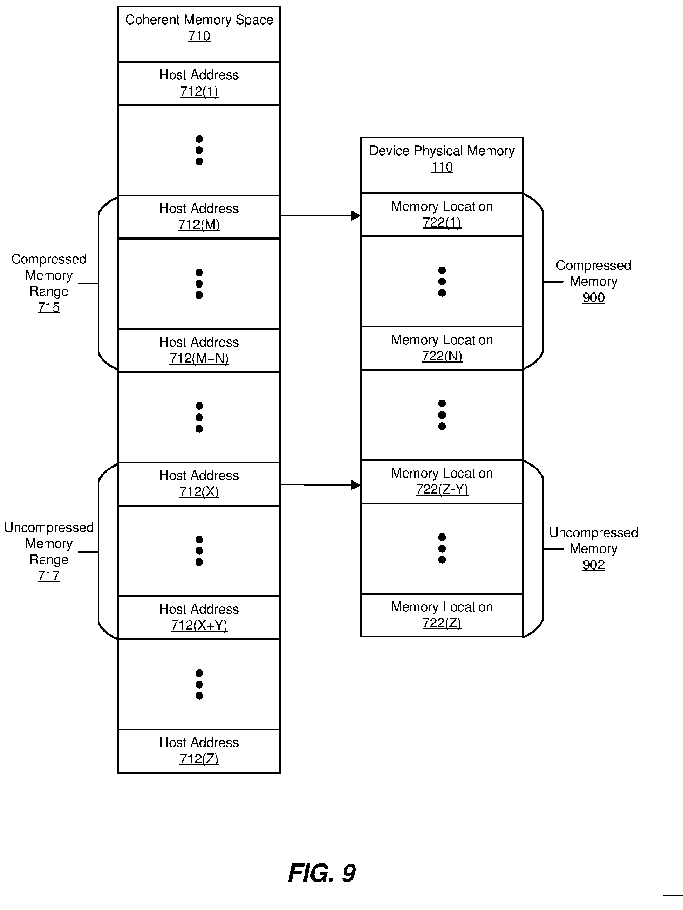

As shown in FIG. 9, memory range 715 of coherent memory space 710 is shown as being designated for storing compressed data such that the disclosed storage devices may automatically compress any data written to memory range 715 of coherent memory space 710 before storage to compressed memory 900 of device physical memory 110. In this example, memory range 717 of coherent memory space 710 may be designated for storing uncompressed data such that any data written to memory range 717 of coherent memory space 710 may be stored uncompressed to uncompressed memory 902 of device physical memory 110.

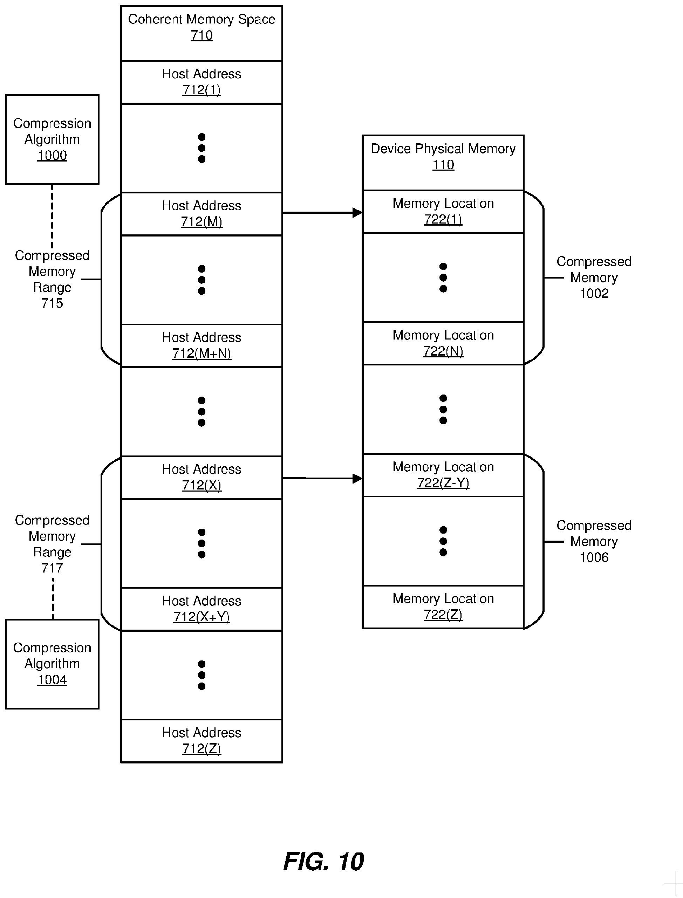

As shown in FIG. 10, memory ranges of coherent memory space 710 may be associated with different encryption/compression algorithms. For example, memory range 715 of coherent memory space 710 may be associated with a compression algorithm 1000 such that the disclosed storage devices may automatically compress any data written to memory range 715 of coherent memory space 710 using compression algorithm 1000 before storage to compressed memory 1002 of device physical memory 110. In this example, memory range 717 of coherent memory space 710 may be associated with a different compression algorithm 1004 such that the disclosed storage devices may automatically compress any data written to memory range 717 of coherent memory space 710 using compression algorithm 1004 before storage to compressed memory 1006 of device physical memory 110.

Returning to FIG. 6 at step 620, one or more of the systems described herein may determine if any request received at step 610 is a write request or a read request. If the request is a request to write data, flow of method 600 may continue to step 630. At step 630, one or more of the systems described herein may perform an in-line transformation on the data included in the write request received at step 610 to produce transformed data. For example, in-line transformation engine 114 may, as part of storage device 108, perform an in-line transformation on data received from host processor 102 via cache-coherent bus 116.

When receiving a request to write data to a particular host address, the systems described herein may determine what, if any, in-line transformations should be performed on the received data by determining if the host address falls within a range of addresses designated for an in-line transformation. If the host address falls within a range of host addresses designated for one or more in-line transformations, the systems described herein may perform the one or more in-line transformations on the received data. Additionally or alternatively, if the host address falls within more than one range of host addresses, each being separately designated for an in-line transformation, the systems described herein may perform each in-line transformation on the received data. However, if the host address does not fall within a range of host addresses designated for an in-line transformation, the systems described herein may refrain from performing any in-line transformations on the received data.

At step 640, one or more of the systems described herein may write the transformed data to the physical address of the device-attached physical memory mapped to the host address received at step 610. For example, in-line transformation engine 114 may, as part of storage device 108, write data to memory location 722(1) in response to receiving a request to write the data to host address 712(M) of shared coherent memory space 710. Exemplary method 600 in FIG. 6 may terminate upon the completion of step 640.

If the request received at step 610 was a request to read data, flow of method 600 may continue from step 620 to step 650. At step 650, one or more of the systems described herein may read previously transformed data from the physical address of the device-attached physical memory mapped to the host address received at step 610. For example, in-line transformation engine 114 may, as part of storage device 108, read data from memory location 722(1) in response to receiving a request to access host address 712(M) of shared coherent memory space 710.

At step 660, one or more of the systems described herein may perform a reversing in-line transformation on previously transformed data to reproduce original data. Before responding to a request to read data from a particular host address, the systems described herein may determine what, if any, reversing in-line transformations need to be performed on the data by determining if the host address falls within a range of addresses designated for an in-line transformation. If the host address falls within a range of host addresses designated for one or more in-line transformations, the systems described herein may perform one or more corresponding reversing in-line transformations on the data to restore the data to its original form. Additionally or alternatively, if the host address falls within more than one range of host addresses, each being separately designated for an in-line transformation, the systems described herein may perform the corresponding reversing in-line transformations on the data. However, if the host address does not fall within a range of host addresses designated for an in-line transformation, the systems described herein may refrain from performing any reversing in-line transformations on the data.

At step 670, one or more of the systems described herein may return the original data to the external host processor via the cache-coherent interconnect. For example, in-line transformation engine 114 may, as part of storage device 108, return original data to host processor 102 via cache-coherent interconnect 116. Exemplary method 600 in FIG. 6 may terminate upon the completion of step 670.

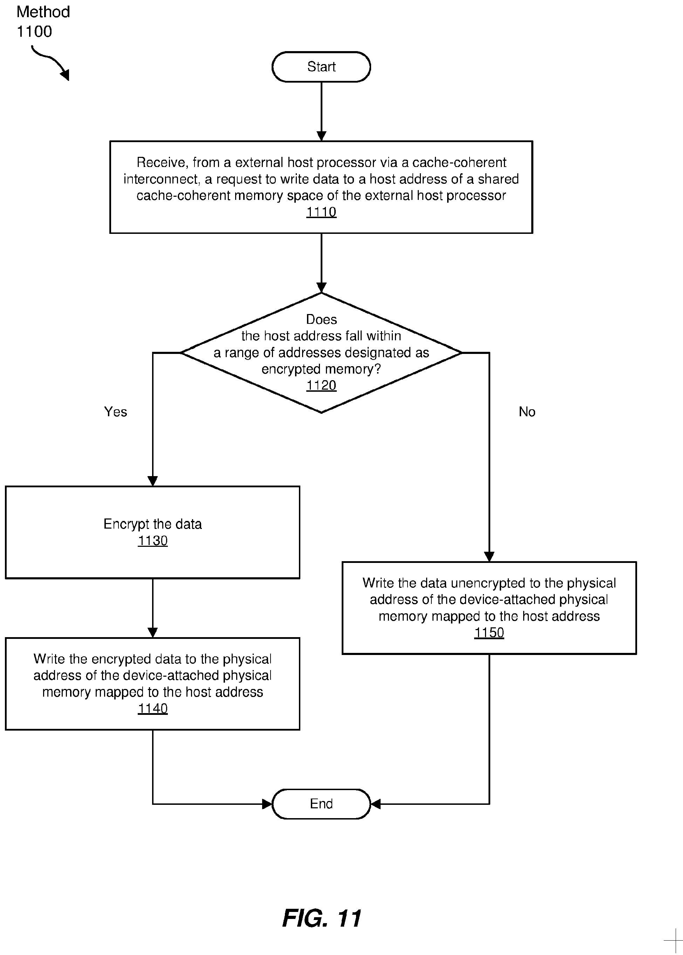

FIG. 11 is a flow diagram of an exemplary computer-implemented method 1100 for encrypting data in-line with writes to coherent host-managed device memory. The steps shown in FIG. 11 may be performed by any suitable computer-executable code and/or computing system, including the system(s) illustrated in FIGS. 1, 2, 3, 4, and 5. In one example, each of the steps shown in FIG. 11 may represent an algorithm whose structure includes and/or is represented by multiple sub-steps, examples of which will be provided in greater detail below.

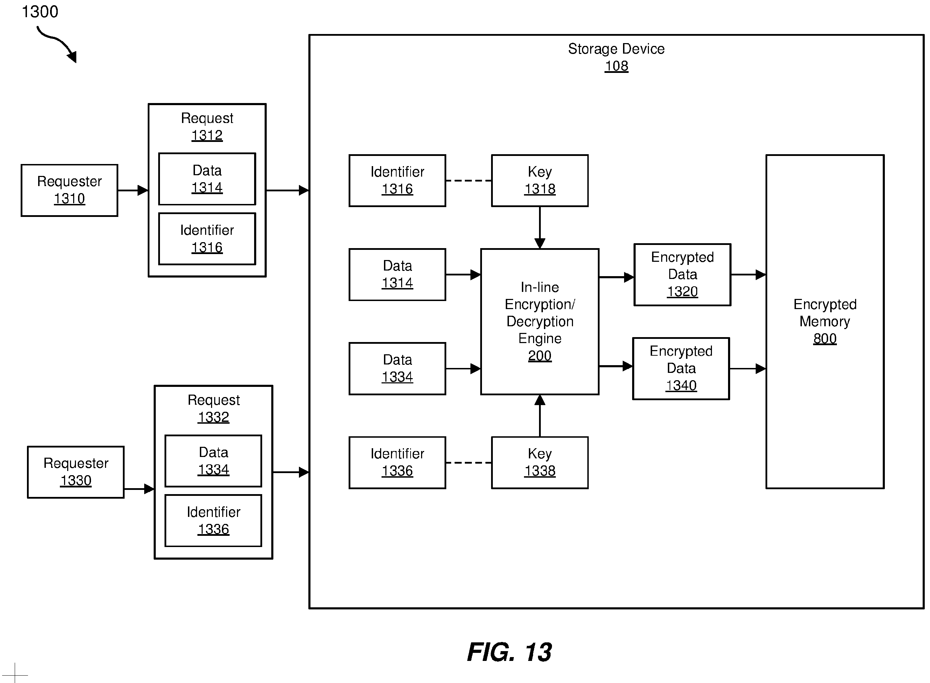

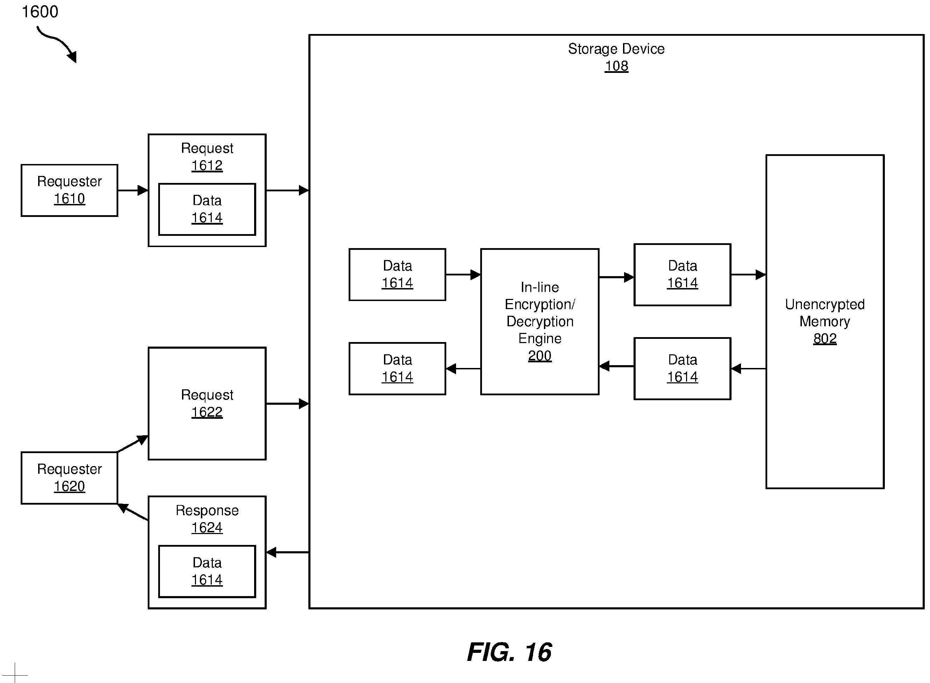

As illustrated in FIG. 11, at step 1110, one or more of the systems described herein may receive, from an external host processor, a request to write data to a host address of a shared coherent memory space. For example, as shown in exemplary data flow 1300 in FIG. 13, in-line encryption/decryption engine 200 may receive a request 1312 from a requester 1310 (e.g., a host processor, core, or thread) to write data 1314 to host address 712(M) mapped to encrypted memory 800 and/or may receive a request 1332 from a requester 1330 to write data 1334 to host address 712 (M+N) also mapped to encrypted memory 800. Using FIG. 16 as another example, in-line encryption/decryption engine 200 may receive a request 1612 from a requester 1610 to write data 1614 to host address 712(X) mapped to unencrypted memory 802.

At step 1120, one or more of the systems described herein may determine whether a host address received in a request to write data falls within a range designated as encrypted memory. If a host address does fall within a range designated as encrypted memory, flow of method 1100 may continue to step 1130. For example, in-line encryption/decryption engine 200 may proceed to step 1130 after determining that host addresses 712(M) and 712(M+N) contained in requests 1312 and 1332 are mapped in coherent memory space 710 to encrypted memory range 715.

At step 1130, one or more of the systems described herein may encrypt the data received at step 1110. For example, as shown in FIG. 13, in-line encryption/decryption engine 200 may generate encrypted data 1320 and encrypted data 1340 by respectively encrypting data 1314 using a cryptographic key 1318 and data 1334 using a cryptographic key 1338. The systems described herein may encrypt data using any suitable cryptographic function, algorithm, or scheme.

In some embodiments, the disclosed systems and methods may manage cryptographic keys at a processor, core, or thread level such that one processor, core, or thread cannot access the encrypted data of another processor, core, or thread. By performing encryption in this way, the disclosed systems may decrease the attack surface of shared system memory and/or prevent data stored to shared system memory from being access by unauthorized processors, cores, or threads or malicious intruders that have gained access to a processor, core, or thread with the ability to access the shared system memory.

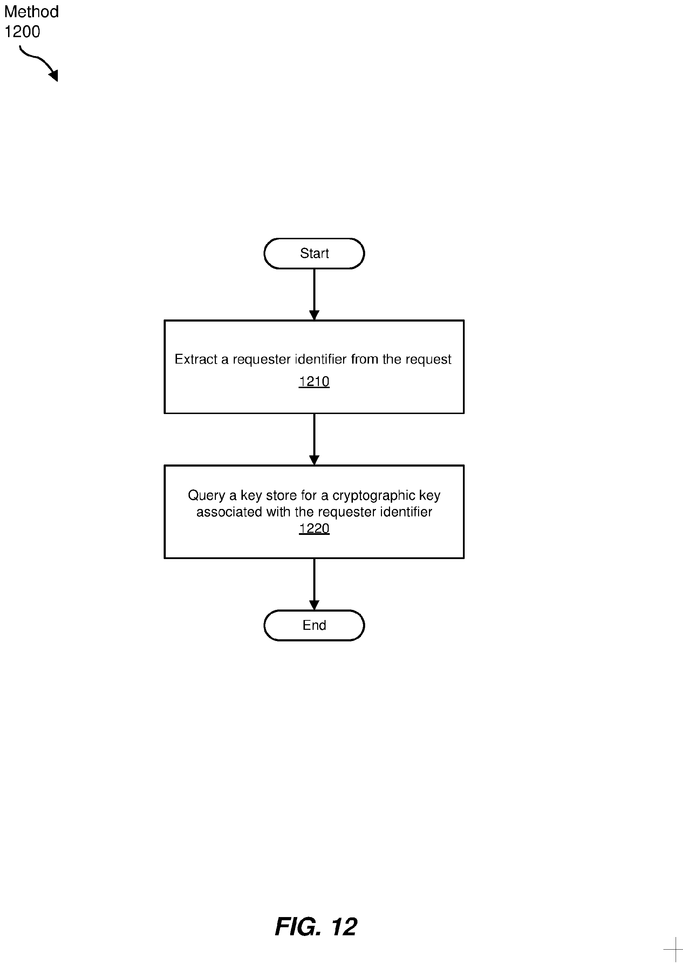

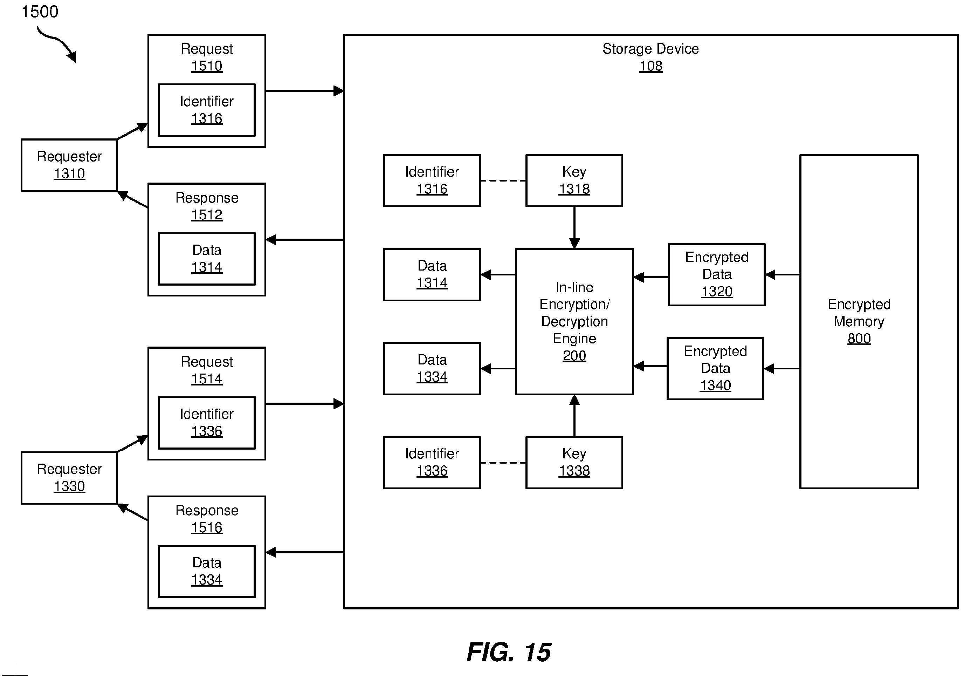

FIG. 12 is a flow diagram of an exemplary computer-implemented method 1200 for identifying cryptographic keys for performing encryption/decryption operations. As shown in FIG. 12 at step 1210, one or more of the systems described herein may extract a requester identifier (e.g., a host identifier, a core identifier, or a thread identifier) from any request to access an encrypted memory region. For example, as shown in FIG. 13, in-line encryption/decryption engine 200 may extract an identifier 1316 of requester 1310 from request 1312 and an identifier 1336 of requester 1330 from request 1332. Using FIG. 15 as another example, in-line encryption/decryption engine 200 may extract identifier 1316 of requester 1310 from request 1510 and identifier 1336 of requester 1330 from request 1514. In some embodiments, the systems described herein may extract typical protocol identifiers for use in identifying cryptographic keys. Additionally or alternatively, the systems described herein may extract identifiers specifically provided by requesters for encryption purposes. In at least one embodiment, the requester identifiers may include a cryptographic key provided by a requester.

At step 1220, one or more of the systems described herein may identify a cryptographic key by querying a key store for a cryptographic key associated with an extracted requester identifier. For example, as shown in FIG. 13, in-line encryption/decryption engine 200 may identify key 1318 and key 1338 by querying a key store for a cryptographic key associated with identifier 1316 and identifier 1336, respectively.

Returning to FIG. 11 at step 1140, one or more of the systems described herein may write the data encrypted at step 1130 to the physical address of the device-attached physical memory mapped to the host address received at step 1110. For example, in-line encryption/decryption engine 200 may write encrypted data 1320 to memory location 722(1) and encrypted data 1340 to memory location 722(N) as shown in FIG. 13. Exemplary method 1100 in FIG. 11 may terminate upon the completion of step 1140.

If the host address received at step 1110 did not fall within a range designated as encrypted memory, flow of method 1100 may continue from step 1120 to step 1150. For example, in-line encryption/decryption engine 200 may proceed to step 1150 after determining that host address 712(X) contained in request 1612 has been mapped in coherent memory space 710 to unencrypted memory range 717. At step 1150, one or more of the systems described herein may write unencrypted data to a physical address of the device-attached physical memory mapped to the host address referenced in the request received at step 1110. For example, as shown in exemplary data flow 1600 in FIG. 16, in-line encryption/decryption engine 200 may write data 1614 to memory location 722(Z-Y) in unencrypted memory 802. Exemplary method 1100 in FIG. 11 may terminate upon the completion of step 1150.

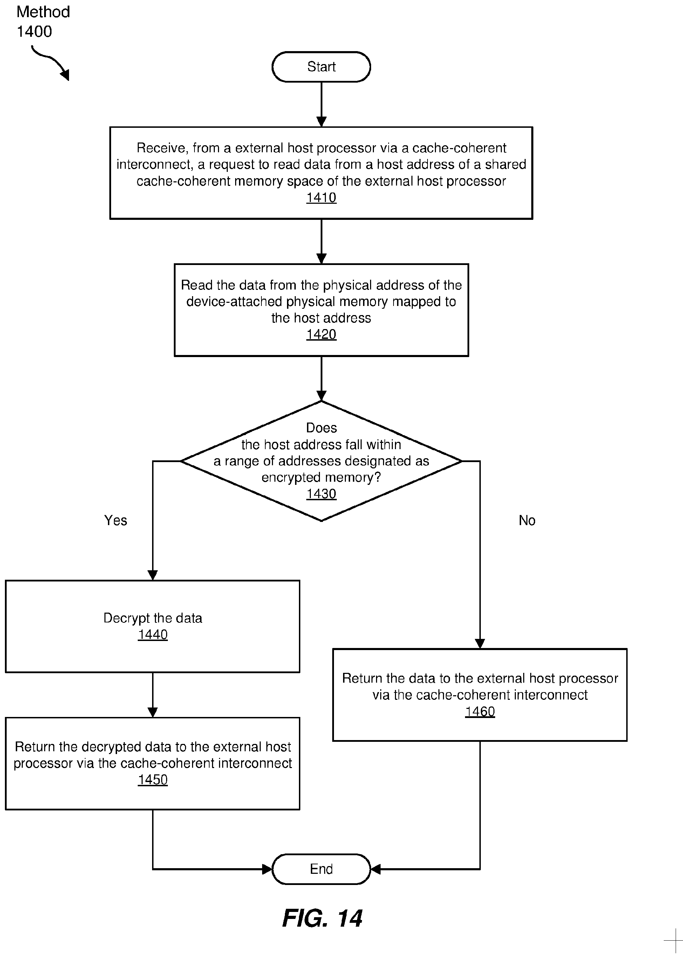

FIG. 14 is a flow diagram of an exemplary computer-implemented method 1400 for decrypting data in-line with reads from coherent host-managed device memory. The steps shown in FIG. 14 may be performed by any suitable computer-executable code and/or computing system, including the system(s) illustrated in FIGS. 1, 2, 3, 4, and 5. In one example, each of the steps shown in FIG. 14 may represent an algorithm whose structure includes and/or is represented by multiple sub-steps, examples of which will be provided in greater detail below.

As illustrated in FIG. 14, at step 1410, one or more of the systems described herein may receive, from an external host processor, a request to read data from a host address of a shared coherent memory space. For example, as shown in FIG. 15, in-line encryption/decryption engine 200 may receive a request 1510 from requester 1310 to read data 1314 from host address 712(M) mapped to encrypted memory 800 and/or may receive a request 1514 from requester 1330 to read data 1334 from host address 712(M+N) mapped to encrypted memory 800. Using FIG. 16 as another example, in-line encryption/decryption engine 200 may receive a request 1622 from a requester 1620 to read data 1614 from host address 712(X) mapped to unencrypted memory 802.

At step 1420, one or more of the systems described herein may read previously stored data from the physical address of the device-attached physical memory that is mapped to the host address received at step 1410. For example, as shown in FIG. 15, in-line encryption/decryption engine 200 may read encrypted data 1320 from memory location 722(1) in response to receiving request 1510 to read data from host address 712(M) of shared coherent memory space 710. Similarly, in-line encryption/decryption engine 200 may read encrypted data 1340 from memory location 722(N) in response to receiving request 1514 to read data from host address 712(M+N) of shared coherent memory space 710. As shown in FIG. 16, in-line encryption/decryption engine 200 may read unencrypted data 1614 from memory location 722(Z-Y) in response to receiving request 1622 to read data from host address 712(X) of shared coherent memory space 710.

At step 1430, one or more of the systems described herein may determine whether a host address received in a request to read data falls within a range designated as encrypted memory. If a host address does fall within a range designated as encrypted memory, flow of method 1400 may continue to step 1440. For example, in-line encryption/decryption engine 200 may proceed to step 1440 after determining that host addresses 712(M) and 712(M+N) contained in requests 1510 and 1514 are mapped in coherent memory space 710 to encrypted memory range 715.

At step 1440, one or more of the systems described herein may decrypt the encrypted data read from device memory at step 1420. For example, as shown in FIG. 15, in-line encryption/decryption engine 200 may regenerate data 1314 and data 1334 by respectively decrypting data 1320 using cryptographic key 1318 and encrypted data 1340 using cryptographic key 1338. The systems described herein may decrypt data using any suitable cryptographic function, algorithm, or scheme. Upon decryption, one or more of the systems described herein may return the original data to the external host processor via the cache-coherent interconnect at step 1450. For example, as shown in exemplary data flow 1500 in FIG. 15, in-line encryption/decryption engine 200 may return data 1314 to requester 1310 in a response 1512 and data 1334 to requester 1330 in a response 1516. Exemplary method 1400 in FIG. 14 may terminate upon the completion of step 1450.

If the host address received at step 1410 did not fall within a range designated as encrypted memory, flow of method 1400 may continue from step 1430 to step 1460. For example, in-line encryption/decryption engine 200 may proceed to step 1460 after determining that host address 712(X) contained in request 1612 has been mapped in coherent memory space 710 to unencrypted memory range 717. At step 1460, one or more of the systems described herein may return data read from device memory to the external host processor via the cache-coherent interconnect without decrypting the data. For example, as shown in FIG. 16, in-line encryption/decryption engine 200 may return data 1614 read from unencrypted memory 802 to requester 1620 in a response 1624 without performing a decryption operation on data 1614. Exemplary method 1400 in FIG. 14 may terminate upon the completion of step 1460.

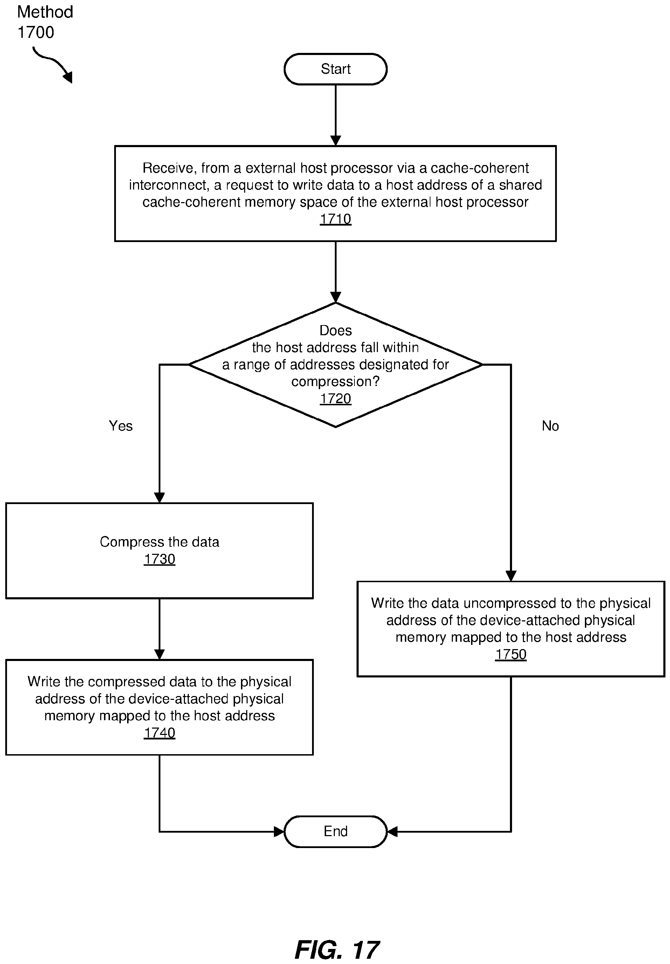

FIG. 17 is a flow diagram of an exemplary computer-implemented method 1700 for compressing data in-line with writes to coherent host-managed device memory. The steps shown in FIG. 17 may be performed by any suitable computer-executable code and/or computing system, including the system(s) illustrated in FIGS. 1, 2, 3, 4, and 5. In one example, each of the steps shown in FIG. 17 may represent an algorithm whose structure includes and/or is represented by multiple sub-steps, examples of which will be provided in greater detail below.

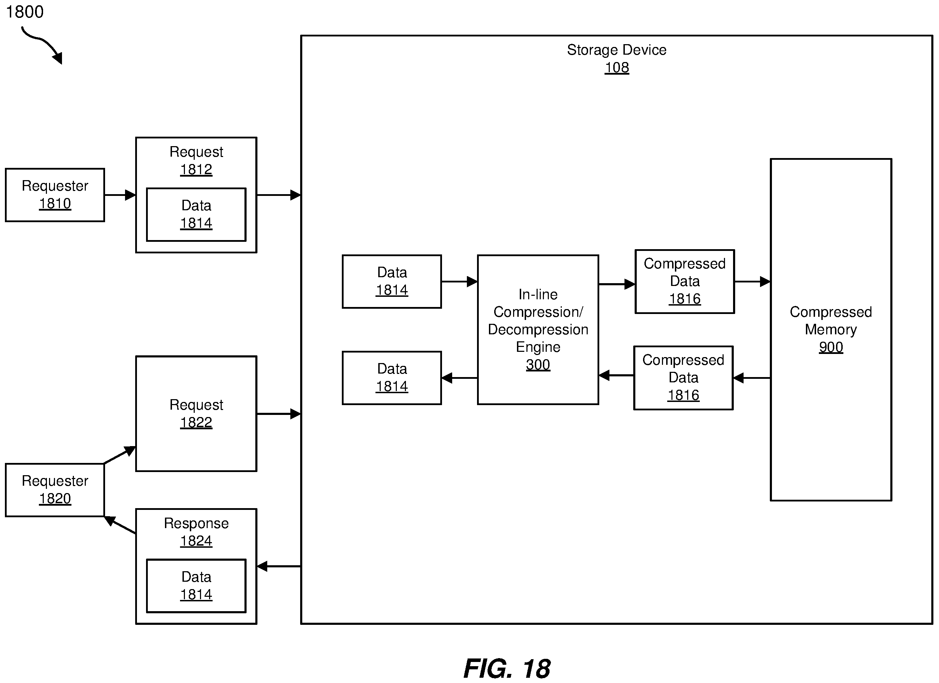

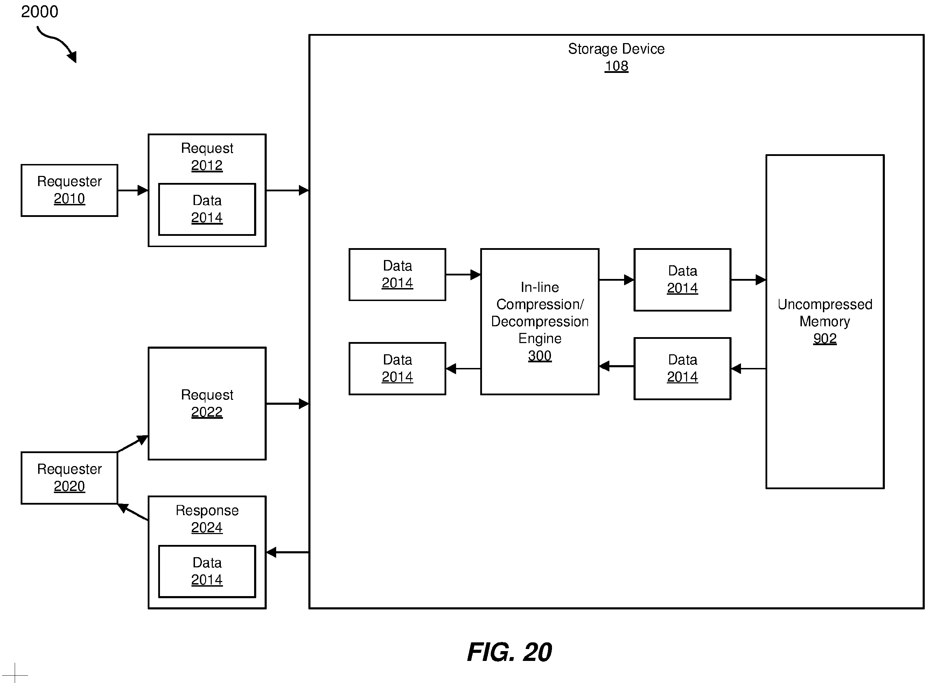

As illustrated in FIG. 17, at step 1710, one or more of the systems described herein may receive, from an external host processor, a request to write data to a host address of a shared coherent memory space. For example, as shown in FIG. 18, in-line compression/decompression engine 300 may receive a request 1812 from a requester 1810 (e.g., a host processor, core, or thread) to write data 1814 to host address 712(M) mapped to compressed memory 900. Using FIG. 20 as another example, in-line compression/decompression engine 300 may receive a request 2012 from a requester 2010 to write data 2014 to host address 712(X) mapped to uncompressed memory 902.

At step 1720, one or more of the systems described herein may determine whether a host address received in a request to write data falls within a range designated as compressed memory. If a host address does fall within a range designated as compressed memory, flow of method 1700 may continue to step 1730. For example, in-line compression/decompression engine 300 may proceed to step 1730 after determining that host address 712(M) contained in request 1812 is mapped in coherent memory space 710 to compressed memory range 715.

At step 1730, one or more of the systems described herein may compress the data received at step 1710. For example, as shown in FIG. 18, in-line compression/decompression engine 300 may generate compressed data 1816 by compressing data 1814. The systems described herein may compress data using any suitable compression function, algorithm, or scheme.

At step 1740, one or more of the systems described herein may write the data compressed at step 1730 to the physical address of the device-attached physical memory mapped to the host address received at step 1710. For example, in-line compression/decompression engine 300 may write compressed data 1816 to memory location 722(1) as shown in FIG. 18. Exemplary method 1700 in FIG. 17 may terminate upon the completion of step 1740.

If the host address received at step 1710 did not fall within a range designated as compressed memory, flow of method 1700 may continue from step 1720 to step 1750. For example, in-line compression/decompression engine 300 may proceed to step 1750 after determining that host address 712(X) contained in request 2012 has been mapped in coherent memory space 710 to uncompressed memory range 717. At step 1750, one or more of the systems described herein may write uncompressed data to a physical address of the device-attached physical memory mapped to the host address referenced in the request received at step 1710. For example, as shown in exemplary data flow 2000 in FIG. 20, in-line compression/decompression engine 300 may write data 2014 to memory location 722(Z-Y) in uncompressed memory 902. Exemplary method 1700 in FIG. 17 may terminate upon the completion of step 1750.

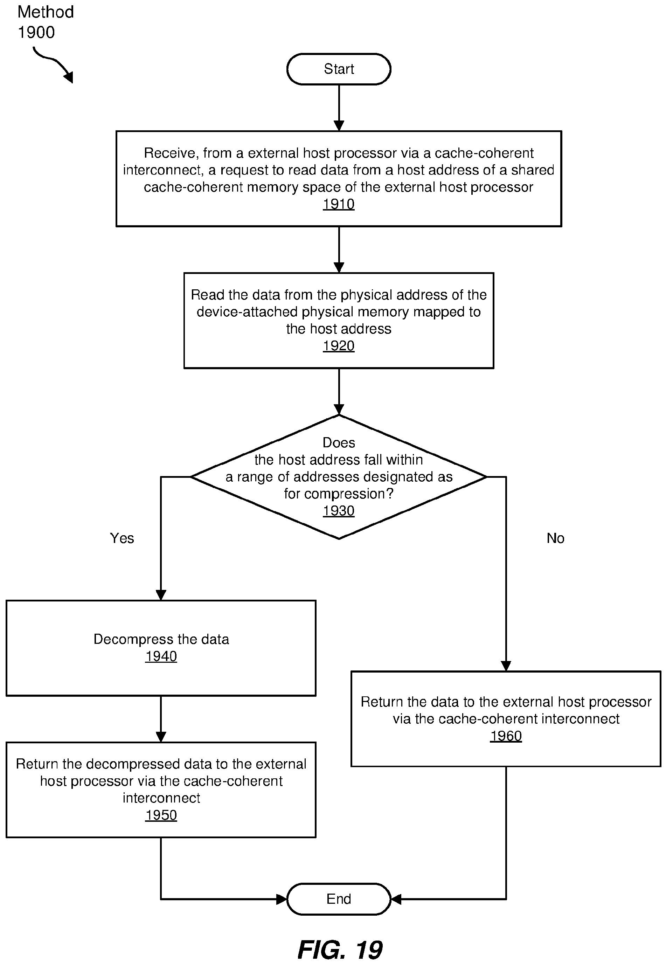

FIG. 19 is a flow diagram of an exemplary computer-implemented method 1900 for decompressing data in-line with reads from coherent host-managed device memory. The steps shown in FIG. 19 may be performed by any suitable computer-executable code and/or computing system, including the system(s) illustrated in FIGS. 1, 2, 3, 4, and 5. In one example, each of the steps shown in FIG. 19 may represent an algorithm whose structure includes and/or is represented by multiple sub-steps, examples of which will be provided in greater detail below.

As illustrated in FIG. 19, at step 1910, one or more of the systems described herein may receive, from an external host processor, a request to read data from a host address of a shared coherent memory space. For example, as shown in FIG. 18, in-line compression/decompression engine 300 may receive a request 1822 from a requester 1820 to read data 1814 from host address 712(M) mapped to compressed memory 900. Using FIG. 20 as another example, in-line compression/decompression engine 300 may receive a request 2022 from a requester 2020 to read data 2014 from host address 712(X) mapped to uncompressed memory 902.

At step 1920, one or more of the systems described herein may read previously stored data from the physical address of the device-attached physical memory that is mapped to the host address received at step 1910. For example, as shown in FIG. 18, in-line compression/decompression engine 300 may read compressed data 1816 from memory location 722(1) in response to receiving request 1822 to read data from host address 712(M) of shared coherent memory space 710. As shown in FIG. 20, in-line compression/decompression engine 300 may read data 2014 from memory location 722(Z-Y) in response to receiving request 2022 to read data from host address 712(X) of shared coherent memory space 710.

At step 1930, one or more of the systems described herein may determine whether a host address received in a request to read data falls within a range designated as compressed memory. If a host address does fall within a range designated as compressed memory, flow of method 1900 may continue to step 1940. For example, in-line compression/decompression engine 300 may proceed to step 1940 after determining that host address 712 (M) contained in requests 1822 is mapped in coherent memory space 710 to compressed memory range 715.

At step 1940, one or more of the systems described herein may decompress the compressed data read from device memory at step 1920. For example, as shown in FIG. 18, in-line compression/decompression engine 300 may regenerate data 1814 by decompressing compressed data 1816. The systems described herein may decompress data using any suitable decompression function, algorithm, or scheme. Upon decompression, one or more of the systems described herein may return the original data to the external host processor via the cache-coherent interconnect at step 1950. For example, as shown in exemplary data flow 1800 in FIG. 18, in-line compression/decompression engine 300 may return data 1814 to requester 1820 in a response 1824. Exemplary method 1900 in FIG. 19 may terminate upon the completion of step 1950.

If the host address received at step 1910 did not fall within a range designated as compressed memory, flow of method 1900 may continue from step 1930 to step 1960. For example, in-line compression/decompression engine 300 may proceed to step 1960 after determining that host address 712(X) contained in request 2022 has been mapped in coherent memory space 710 to uncompressed memory range 717. At step 1960, one or more of the systems described herein may return data read from device memory to the external host processor via the cache-coherent interconnect without decompressing the data. For example, as shown in FIG. 20, in-line compression/decompression engine 300 may return data 2014 read from uncompressed memory 902 to requester 2020 in a response 2024 without performing a decompression operation on data 2014. Exemplary method 1900 in FIG. 19 may terminate upon the completion of step 1960.

As mentioned above, embodiments of the present disclosure may perform various in-line encryption/decryption and/or compression/decompression operations when reading and/or writing data to shared device-attached memory resources. In some embodiments, the disclosed devices may perform these in-line transformations in a way that is transparent to external host processors and/or accelerators. In some embodiments, the disclose devices may enable a coherent memory space to be partitioned into multiple regions, each region being associated with one or more in-line transformations, such that external host processors and/or accelerators are able to choose an appropriate in-line transformation by writing data to an associated region of memory. For example, a coherent memory space may include one or more encrypted sections, one or more unencrypted sections, one or more compressed sections, and/or one or more uncompressed sections. When performing encryption, the disclosed systems and methods may manage cryptographic keys at a processor, core, or thread level such that one processor, core, or thread cannot access the encrypted data of another processor, core, or thread. By performing encryption in this way, the disclosed systems may decrease the attack surface of shared system memory and/or prevent data stored to shared system memory from being access by unauthorized entities or malicious intruders. When performing compression, the disclosed systems may use multiple compression algorithms, each being associated with one or more memory regions and/or types of stored data.

### Example Embodiments

Example 1: A storage device may include (1) a device-attached physical memory accessible to an external host processor via a cache-coherent interconnect, addresses of the device-attached physical memory being mapped to a coherent memory space of the external host processor, and (2) one or more internal physical processors adapted to (a) receive, from the external host processor via the cache-coherent interconnect, a request to write first data to a host address of the coherent memory space of the external host processor, (b) perform an in-line transformation on the first data to generate second data, and (c) write the second data to a physical address of the device-attached physical memory corresponding to the host address.

Example 2: The storage device of Example 1, wherein the in-line transformation may include an encryption operation, and the one or more internal physical processors may be adapted to (1) perform the in-line transformation by performing the encryption operation on the first data and (2) write the second data by writing the encrypted first data to the physical address of the device-attached physical memory.

Example 3: The storage device of any of Examples 1-2, further including a cryptographic-key store containing multiple cryptographic keys, each of the cryptographic keys being mapped to one or more requester identifiers. In this example, the request may include a requester identifier previously mapped to a cryptographic key in the cryptographic-key store, and the one or more internal physical processors may be adapted to (1) use the requester identifier to locate the cryptographic key and (2) use the cryptographic key to perform the encryption operation on the first data.

Example 4: The storage device of any of Examples 1-3, wherein the requester identifier may include an identifier of a thread executing on the external host processor, the thread having generated the request.

Example 5: The storage device of any of Examples 1-4, wherein the one or more internal physical processors may be further adapted to receive, from the external host processor, a second request to write third data to a second host address of the coherent memory space of the external host processor. In this example, the second request may include a second requester identifier previously mapped to a second cryptographic key in the cryptographic-key store, the second requester identifier may include a second identifier of a second thread executing on the external host processor, and the second thread may have generated the second request. The one or more internal physical processors may also be further adapted to (1) translate the second host address into a second device address of the device-attached physical memory, (2) use the second requester identifier to locate the second cryptographic key, (3) use the second cryptographic key to perform the encryption operation on the third data, and (4) write the encrypted third data to the second physical address of the device-attached physical memory.

Example 6: The storage device of any of Examples 1-5, wherein (1) a first range of addresses of the coherent memory space of the external host processor may be designated as encrypted memory, the host address falling within the first range of addresses, (2) a second range of addresses of the coherent memory space of the external host processor may be designated as unencrypted memory, and (3) the one or more internal physical processors may be adapted to perform the encryption operation on the first data in response to determining that the host address falls within the first range of addresses.

Example 7: The storage device of any of Examples 1-6, wherein the one or more internal physical processors may be further adapted to (1) receive, from the external host processor, a second request to write third data to a second host address of the coherent memory space of the external host processor, the second host address falling within the second range of addresses, (2) translate the second host address into a second device address of the device-attached physical memory, (3) refrain from encrypting the second data in response to determining that the second host address falls within the second range of addresses, and (4) write the unencrypted third data to the second physical address of the device-attached physical memory.

Example 8: The storage device of any of Examples 1-7, wherein the in-line transformation may include a compression operation, and the one or more internal physical processors may be adapted to (1) perform the in-line transformation by performing the compression operation on the first data and (2) write the second data by writing the compressed first data to the physical address of the device-attached physical memory.

Example 9: The storage device of any of Examples 1-8, wherein (1) a first range of addresses of the coherent memory space of the external host processor may be designated for storing a first type of data associated with the compression operation, the host address falling within the first range of addresses, (2) a second range of addresses of the coherent memory space of the external host processor may be designated for storing a second type of data associated with a second compression operation, and (3) the one or more internal physical processors may be adapted to perform the compression operation on the first data in response to determining that the host address falls within the first range of addresses.

Example 10: The storage device of any of Examples 1-9, wherein the one or more internal physical processors may be further adapted to (1) receive, from the external host processor, a second request to write third data to a second host address of the coherent memory space of the external host processor, the second host address falling within the second range of addresses, (2) translate the second host address into a second device address of the device-attached physical memory, (3) perform the second compression operation, instead of the compression operation, on the third data in response to determining that the second host address falls within the second range of addresses, and (4) write the compressed third data to the second physical address of the device-attached physical memory.

Example 11: A storage device including (1) a device-attached physical memory managed by and accessible to an external host processor via a cache-coherent interconnect, wherein addresses of the device-attached physical memory may be mapped to a coherent memory space of the external host processor, and (2) one or more internal physical processors adapted to (a) receive, from the external host processor via the cache-coherent interconnect, a request to read from a host address of the coherent memory space of the external host processor, (b) translate the host address into a device address of the device-attached physical memory, (c) read first data from the physical address of the device-attached physical memory, (d) perform an in-line transformation on the first data to generate second data, and (e) return the second data to the external host processor via the cache-coherent interconnect.

Example 12: The storage device of Example 11, wherein the in-line transformation may include a decryption operation, and the one or more internal physical processors may be adapted to (1) perform the in-line transformation by performing the decryption operation on the first data and (2) return the second data by returning the decrypted first data to the external host processor via the cache-coherent interconnect.

Example 13: The storage device of any of Examples 1-12, further including a cryptographic-key store containing multiple cryptographic keys, each of the cryptographic keys being mapped to one or more requester identifiers. In this example, the request may include a requester identifier previously mapped to a cryptographic key in the cryptographic-key store, and the one or more internal physical processors may be adapted to use the requester identifier to locate the cryptographic key and use the cryptographic key to perform the decryption operation on the first data.

Example 14: The storage device of any of Examples 1-13, wherein the requester identifier may include an identifier of a thread executing on the external host processor, the thread having generated the request.

Example 15: The storage device of any of Examples 1-14, wherein the one or more internal physical processors may be further adapted to receive, from the external host processor, a second request to read from a second host address of the coherent memory space of the external host processor. In this example, the second request may include a second requester identifier previously mapped to a second cryptographic key in the cryptographic-key store, the second requester identifier may include a second identifier of a second thread executing on the external host processor, and the second thread may have generated the second request. The one or more internal physical processors may be further adapted to (1) translate the second host address into a second device address of the device-attached physical memory, (2) use the second requester identifier to locate the second cryptographic key, (3) use the second cryptographic key to perform the decryption operation on the third data, and (4) return the decrypted third data to the external host processor via the cache-coherent interconnect.

Example 16: The storage device of any of Examples 1-15, wherein a first range of addresses of the coherent memory space of the external host processor may be designated as encrypted memory, the host address falling within the first range of addresses, a second range of addresses of the coherent memory space of the external host processor may be designated as unencrypted memory, and the one or more internal physical processors may be adapted to perform the decryption operation on the first data in response to determining that the host address falls within the first range of addresses.

Example 17: The storage device of any of Examples 1-16, wherein the one or more internal physical processors may be further adapted to (1) receive, from the external host processor, a request to read from a second host address of the coherent memory space of the external host processor, the second host address falling within the second range of addresses, (2) translate the second host address into a second device address of the device-attached physical memory, (3) refrain from decrypting the second data in response to determining that the second host address falls within the second range of addresses, and (4) return the third data to the external host processor via the cache-coherent interconnect.

Example 18: The storage device of any of Examples 1-17, wherein the in-line transformation may include a decompression operation, the one or more internal physical processors may be adapted to (1) perform the in-line transformation by performing the decompression operation on the first data and (2) return the second data by returning the decompressed first data to the external host processor via the cache-coherent interconnect.

Example 19: The storage device of any of Examples 1-18, wherein a first range of addresses of the coherent memory space of the external host processor may be designated for storing a first type of data associated with the decompression operation, the host address falling within the first range of addresses, a second range of addresses of the coherent memory space of the external host processor may be designated for storing a second type of data associated with a second decompression operation, and the one or more internal physical processors may be adapted to perform the decompression operation on the first data in response to determining that the host address falls within the first range of addresses.

Example 20: A computer-implemented method may include (1) receiving, from an external host processor via a cache-coherent interconnect, a request to access a host address of a coherent memory space of the external host processor, wherein physical addresses of a device-attached physical memory may be mapped to the coherent memory space of the external host processor, (2) when the request is to write data to the host address, (a) performing an in-line transformation on the data to generate second data and (b) writing the second data to the physical address of the device-attached physical memory mapped to the host address, and (3) when the request is to read data from the host address, (a) reading the data from the physical address of the device-attached physical memory mapped to the host address, (b) performing a reversing in-line transformation on the data to generate second data, and (c) returning the second data to the external host processor via the cache-coherent interconnect.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive data to be transformed over a cache-coherent interconnect, transform the data (e.g., by encryption or compression), output a result of the transformation to device-connected memory, and use the result of the transformation to respond to future read requests for the data after reversing any transformations previously made. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of a device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A storage device comprising:
a device-attached physical memory accessible to an external host processor via a cache-coherent interconnect, wherein addresses of the device-attached physical memory are mapped to a coherent memory space of the external host processor;
one or more internal physical processors adapted to:
receive, from the external host processor via the cache-coherent interconnect, a request to write first data to a host address of the coherent memory space of the external host processor;
perform an in-line transformation on the first data to generate second data; and
write the second data to a physical address of the device-attached physical memory corresponding to the host address.

2. The storage device of claim 1, wherein:
the in-line transformation comprises an encryption operation;
the one or more internal physical processors are adapted to:
perform the in-line transformation by performing the encryption operation on the first data;
write the second data by writing the encrypted first data to the physical address of the device-attached physical memory.

3. The storage device of claim 2, further comprising a cryptographic-key store containing multiple cryptographic keys, each of the cryptographic keys being mapped to one or more requester identifiers, wherein:
the request comprises a requester identifier previously mapped to a cryptographic key in the cryptographic-key store; and
the one or more internal physical processors are adapted to:
use the requester identifier to locate the cryptographic key; and
use the cryptographic key to perform the encryption operation on the first data.

4. The storage device of claim 3, wherein the requester identifier comprises an identifier of a thread executing on the external host processor, the thread having generated the request.

5. The storage device of claim 4, wherein the one or more internal physical processors are further adapted to:
receive, from the external host processor, a second request to write third data to a second host address of the coherent memory space of the external host processor, wherein:
the second request comprises a second requester identifier previously mapped to a second cryptographic key in the cryptographic-key store;
the second requester identifier comprises a second identifier of a second thread executing on the external host processor; and
the second thread generated the second request;
translate the second host address into a second device address of the device-attached physical memory;
use the second requester identifier to locate the second cryptographic key;
use the second cryptographic key to perform the encryption operation on the third data; and
write the encrypted third data to the second physical address of the device-attached physical memory.

6. The storage device of any of claims 2 to 5, wherein:
a first range of addresses of the coherent memory space of the external host processor is designated as encrypted memory, the host address falling within the first range of addresses;
a second range of addresses of the coherent memory space of the external host processor is designated as unencrypted memory; and
the one or more internal physical processors are adapted to perform the encryption operation on the first data in response to determining that the host address falls within the first range of addresses.

7. The storage device of claim 6, wherein the one or more internal physical processors are further adapted to:
receive, from the external host processor, a second request to write third data to a second host address of the coherent memory space of the external host processor, the second host address falling within the second range of addresses;
translate the second host address into a second device address of the device-attached physical memory;
refrain from encrypting the second data in response to determining that the second host address falls within the second range of addresses; and
write the unencrypted third data to the second physical address of the device-attached physical memory.

8. The storage device of any of claims 1 to 5, wherein:
the in-line transformation comprises a compression operation;
the one or more internal physical processors are adapted to:
perform the in-line transformation by performing the compression operation on the first data;
write the second data by writing the compressed first data to the physical address of the device-attached physical memory.

9. The storage device of claim 8, wherein:
a first range of addresses of the coherent memory space of the external host processor is designated for storing a first type of data associated with the compression operation, the host address falling within the first range of addresses;
a second range of addresses of the coherent memory space of the external host processor is designated for storing a second type of data associated with a second compression operation; and
the one or more internal physical processors are adapted to perform the compression operation on the first data in response to determining that the host address falls within the first range of addresses.

10. The storage device of claim 9, wherein the one or more internal physical processors are further adapted to:
receive, from the external host processor, a second request to write third data to a second host address of the coherent memory space of the external host processor, the second host address falling within the second range of addresses;
translate the second host address into a second device address of the device-attached physical memory;
perform the second compression operation, instead of the compression operation, on the third data in response to determining that the second host address falls within the second range of addresses; and
write the compressed third data to the second physical address of the device-attached physical memory.

11. A storage device comprising:
a device-attached physical memory managed by and accessible to an external host processor via a cache-coherent interconnect, wherein addresses of the device-attached physical memory are mapped to a coherent memory space of the external host processor;
one or more internal physical processors adapted to:
receive, from the external host processor via the cache-coherent interconnect, a request to read from a host address of the coherent memory space of the external host processor;
translate the host address into a device address of the device-attached physical memory;
read first data from the physical address of the device-attached physical memory;
perform an in-line transformation on the first data to generate second data; and
return the second data to the external host processor via the cache-coherent interconnect.

12. The storage device of claim 11, wherein:
the in-line transformation comprises a decryption operation;
the one or more internal physical processors are adapted to:
perform the in-line transformation by performing the decryption operation on the first data;
return the second data by returning the decrypted first data to the external host processor via the cache-coherent interconnect; optionally
further comprising a cryptographic-key store containing multiple cryptographic keys, each of the cryptographic keys being mapped to one or more requester identifiers, wherein:
the request comprises a requester identifier previously mapped to a cryptographic key in the cryptographic-key store; and
the one or more internal physical processors are adapted to:
use the requester identifier to locate the cryptographic key; and
use the cryptographic key to perform the decryption operation on the first data; optionally
wherein the requester identifier comprises an identifier of a thread executing on the external host processor, the thread having generated the request; optionally
wherein the one or more internal physical processors are further adapted to:
receive, from the external host processor, a second request to read from a second host address of the coherent memory space of the external host processor, wherein:
the second request comprises a second requester identifier previously mapped to a second cryptographic key in the cryptographic-key store;
the second requester identifier comprises a second identifier of a second thread executing on the external host processor; and
the second thread generated the second request;
translate the second host address into a second device address of the device-attached physical memory;
use the second requester identifier to locate the second cryptographic key;
use the second cryptographic key to perform the decryption operation on the third data; and
return the decrypted third data to the external host processor via the cache-coherent interconnect.

13. The storage device of claim 12, wherein:
a first range of addresses of the coherent memory space of the external host processor is designated as encrypted memory, the host address falling within the first range of addresses;
a second range of addresses of the coherent memory space of the external host processor is designated as unencrypted memory; and
the one or more internal physical processors are adapted to perform the decryption operation on the first data in response to determining that the host address falls within the first range of addresses; optionally
wherein the one or more internal physical processors are further adapted to:
receive, from the external host processor, a request to read from a second host address of the coherent memory space of the external host processor, the second host address falling within the second range of addresses;
translate the second host address into a second device address of the device-attached physical memory;
refrain from decrypting the second data in response to determining that the second host address falls within the second range of addresses; and
return the third data to the external host processor via the cache-coherent interconnect.

14. The storage device of claim 11, wherein:
the in-line transformation comprises a decompression operation;
the one or more internal physical processors are adapted to:
perform the in-line transformation by performing the decompression operation on the first data; and
return the second data by returning the decompressed first data to the external host processor via the cache-coherent interconnect; optionally
wherein:
a first range of addresses of the coherent memory space of the external host processor is designated for storing a first type of data associated with the decompression operation, the host address falling within the first range of addresses;
a second range of addresses of the coherent memory space of the external host processor is designated for storing a second type of data associated with a second decompression operation; and
the one or more internal physical processors are adapted to perform the decompression operation on the first data in response to determining that the host address falls within the first range of addresses.

15. A computer-implemented method comprising:
receiving, from an external host processor via a cache-coherent interconnect, a request to access a host address of a coherent memory space of the external host processor, wherein physical addresses of a device-attached physical memory are mapped to the coherent memory space of the external host processor;
when the request is to write data to the host address,
performing an in-line transformation on the data to generate second data; and
writing the second data to the physical address of the device-attached physical memory mapped to the host address; and
when the request is to read data from the host address,
reading the data from the physical address of the device-attached physical memory mapped to the host address;
performing a reversing in-line transformation on the data to generate second data; and
returning the second data to the external host processor via the cache-coherent interconnect.
